# EUROPÄISCHE PATENTSCHRIFT

(11) **EP 2 966 416 B1**
(45) Veröffentlichungstag und Bekanntmachung des Hinweises auf die Patenterteilung: **19.04.2017**
(21) Anmeldenummer: 15173528.9
(22) Anmeldetag: 24.06.2015
(51) Int. Cl.: G01F 1/66, G01F 15/18

(54) **MESSKOPFANKLEMMUNG FÜR ULTRASCHALL-DURCHFLUSS-MESSKÖPFE**
MEASURING HEAD CLAMP-ON DEVICE FOR ULTRASONIC FLOW MEASURING HEADS
SERRAGE DE TÊTE DE MESURE POUR TÊTES DE MESURE DE DÉBIT À ULTRASONS

(30) Priorität: 11.07.2014 DE 102014109772
(43) Veröffentlichungstag der Anmeldung: 13.01.2016
(73) Patentinhaber: FLEXIM FLEXIBLE INDUSTRIEMESSTECHNIK GMBH, 12681 Berlin (DE)
(72) Erfinder: Scharnitzky, Jan Frederik, 10999 Berlin (DE)
(74) Vertreter: Garrels, Sabine

(56) Entgegenhaltungen:
- DE-U1- 29 510 150
- JP-A- S6 184 523
- JP-A- 2003 050 144
- KR-A- 20100 002 683

## Beschreibung

Die erfindungsgemäße Lösung für eine Messkopfanklemmung für Ultraschall-Durchfluss- Messköpfe liegt auf dem technischen Gebiet der Ultraschalldurchflussmesstechnik.

Ein Paar Ultraschall-Durchfluss- Messköpfe wird außen auf eine Rohrleitung aufgesetzt. Mittels eines Messumformers wird abwechselnd in beiden Messköpfen ein Ultraschallimpuls erzeugt und nach dem Durchlaufen von Rohrwand und Medium im Rohr vom jeweils anderen Messkopf empfangen. Über die gemessene Laufzeitdifferenz (mit bzw. gegen die Strömung des Mediums), die Rohrparameter und das Strömungsprofil wird im Messumformer die Durchflussmenge berechnet.

Voraussetzung für diese Messungen ist eine sichere Übertragung der Ultraschallimpulse vom Messkopf in die Rohrwand. Dies wird durch ein geeignetes Koppelmittel, die fluchtende Ausrichtung der Messköpfe, entlang der Rohrachse zueinander und durch die Anpressung der Messköpfe auf die Rohrwand erreicht. Die Ausrichtung der Messköpfe und die Anpressung sind Aufgaben einer Messkopfanklemmung.

Die Ultraschall-Durchfluss- Messköpfe werden derzeit meist mittels schienenartigen Befestigungssystemen montiert, diese werden mit metallischen Spannbändern oder Ketten am Rohr befestigt.

Neben den schienenartigen Systemen für die Aufnahme eines oder mehrerer Messkopfpaare gibt es auch Befestigungssysteme mit Aufnehmern für die Aufnahme eines einzelnen Messkopfes. Die Messköpfe werden durch die Befestigungssysteme positioniert und in den meisten Fällen werden die Messköpfe mittels Federelementen elastisch an die Rohrwand angepresst.

Es sind beispielsweise Messkopfbefestigungen für Ultraschall-Durchflussmessgeräte bekannt, die eine definierte Anpresskraft garantieren. Die Messkopfbefestigungen sind für die Festinstallation konstruiert und bieten eine kontinuierliche, gleichbleibende Anpressung der Messköpfe auf das Rohr.

Bei der Clamp-on-Durchflussmessung sind die beiden für die Erzeugung eines Schallpfades nötigen Schallwandler so auf dem Rohr angeordnet, dass der Schallpfad auf dem Durchmesser des Rohres verläuft. Dazu können die Schallwandler auf gegenüberliegenden Seiten des Rohres angeordnet sein. Es handelt sich dann um die sogenannte Direktanordnung. (DE 102011005170 B4, DE 102005047790 A1) Alternativ ist die Reflexanordnung möglich, bei der die Schallwandler auf derselben Seite des Messrohres angeordnet sind und das Schallsignal an der gegenüberliegenden Rohrinnenseite einmal reflektiert wird. (DE 102008029772 A1)

In DE 102008034411 A1 wird ein Verfahren und ein Messsystem zur Bestimmung und/oder Überwachung des Durchflusses eines Messmediums durch ein Messrohr mit mindestens zwei Ultraschall-Durchfluss- Messköpfe beschrieben. Es wird außerdem ein Verfahren zur Montage eines solchen Messsystems offenbart. Dazu weist das Messsystem einen Messkopfhalter auf, der am Messrohr über einen Befestigungsmechanismus lösbar befestigbar ist. Das Messkopfgehäuse mit den Ultraschall-Messköpfe bildet eine am Sensorhalter befestigbare und vom Sensorhalter lösbare Einheit. Die Ultraschall-Durchfluss-Messköpfe werden bei der Montage mit einer vorgebbaren Kraft auf das Messrohr gedrückt. Ein Befestigungsblech, als Teil des Sensorhalters, weist eine prismatische Ausbuchtung auf der dem Messrohr zugewandten Seite auf, welche als Biegung des Befestigungsblechs herstellbar ist. Das Befestigungsblech wird an seinem vorderen und hinteren Ende mittels U-Bügel oder Spannbänder direkt am Messrohr befestigt.

In der Patentschrift US 5131278 A wird der Sensorhalter mittels Spannbändern auf dem Messrohr mittels Schrauben und Muttern befestigt.

In US 6397683 B1 werden die Messsensoren auf einer Schiene und mit Hilfe zweier Rohrschellen auf dem Messrohr befestigt. Zum Verstellen des Abstands der beiden Sensoren, ist mindestens ein Sensor von der Rohrleitung zu lösen. Ebenfalls ist dessen Fixierband zu lösen. Beides ist nach einer Neuausrichtung wieder festzustellen.

EP 1840528 B1 offenbart eine Schiene zur verschiebbaren Befestigung von Ultraschall-Messköpfen auf dem Messrohr.

In DE 102005052550 B3 wird eine Befestigungseinrichtung zur Befestigung einer Halteeinrichtung zur Halterung des Messwandlers an dem Träger offenbart. Die Befestigungseinrichtung besteht aus einer Ratscheneinrichtung und einem Grundkörper, der mit einer Rändelmutter auf der Ratscheneinrichtung befestigt wird. Eine Vorrichtung zum Zentrieren besteht aus einer Nut in die eine Nase geführt wird, um einen Führungsrahmen sicher in Längsrichtung zum Rohr ausrichten zu können.

US 5001936 A zeigt in gleicher Weise, dass die Halterung mit zwei Schenkeln und versehen ist, welche eine Anpassung an alle möglichen Rohrdurchmesser nicht ohne weiteres gestattet. In_US 20120085164 A1 ist eine Ansicht dargestellt, aus der hervorgeht, dass je kleiner der Rohrdurchmesser ist, umso dichter wird der Messkopf auf dem Rohr aufliegen. Das Führungselement ist nicht variabel ausrichtbar.

In DE 102004052489 A1 wird eine Vorrichtung offenbart, welche es ermöglicht, den Sensor direkt an die Rohrleitung zu pressen. Dafür ist eine Koppelmatte aus einem Elastomer oder eine Metallfolie zwischen Sensor und Rohrleitung vorgesehen. Die Konstruktion dient dazu, einen erhöhten Anpressdruck des Sensors zu ermöglichen.

WO 1998017980 A1 zeigt die Möglichkeit, durch Abstandshalter den Abstand der Messeinrichtung entsprechend der Krümmung des Rohres anzupassen. Die Abstandshalter sind mit Stiften versehen und können vor dem Aufsetzten der Spanneinrichtung auf das Rohr an unterschiedlichen Positionen eingesetzt werden. Dadurch ist eine gewisse Anpassung an unterschiedliche Rohrdurchmesser möglich, eine stufenlose Anpassung ist allerdings nicht vorgesehen. JP 2003-50144 A offenbart eine Ultraschall-Durchflussmessvorrichtung, welche einen Führungsrahmen und eine feste Schiene umfasst und bei der die Schallköpfe an gewünschten Positionen an einer Leitung festgelegt sind. Torsionsfedern, welche an der Führungsschiene befestigt sind, drücken elastisch gegen die äußere Umfangsfläche der Rohrleitung so dass, wenn der Führungsrahmen an der Leitung angebracht ist, die Mittellinie des Führungsrahmens in der verlängerten Fläche der Fortpflanzungsebene liegt.

Insbesondere die Messungen von Gasen stellt eine erhöhte Anforderung an eine ausreichend große Messkopfpressung, da hierbei Dämpfungselemente an den Rohrwänden montiert werden um Störschall in der Rohrwand zu minimieren. Um trotz dieser Dämpfungselemente eine ausreichend gute Signaleinkopplung zu erreichen ist hierbei ein ausreichend hoher Anpressdruck, der Messköpfe ans Rohr besonders wichtig.

Die meisten vorhandenen Lösungen erfüllen nicht die Forderung nach einer definierten Anpresskraft, die unabhängig vom Wissen und Geschick des Anwenders erreicht wird. Befestigt der Anwender beispielsweise die Messkopfanklemmung mit zu geringer Anpresskraft, erfolgt eine schlechte bis nicht ausreichende Ankopplung der Messköpfe an das Rohr und es resultiert daraus keine gute Signaleinkopplung. Oder die Messkopfanklemmung wird mit einer zu großen Anpresskraft befestigt, woraus eine zu große Belastung für die verwendeten Bauteile resultiert.

### Darstellung der Erfindung

Die Aufgabe der Erfindung besteht darin, die bekannten Messkopfbefestigungen für Ultraschall-Durchflussmessgeräte für die notwendigen Funktionen als portable Anklemmung an verschiedene Durchmesser, wie große Rohre oder kleine Schläuche, zu funktionalisieren und die Handhabung zu vereinfachen. Hierzu zählt eine werkzeuglose Montage mit möglichst wenigen Betätigungselementen, die Option zwei unterschiedlich große Anpresskräfte wählen zu können, ein wieder verwendbares Spannmittel auszuwählen, welches sich platzsparend verpacken lässt und gleichzeitig eine hohe Bruchlast aufweist. Es ist weiterhin Aufgabe der Erfindung, die Montage der Ultraschall-Durchfluss- Messköpfe an der laufenden Anlage ohne Rohrleitungsunterbrechungen und ohne Leckagerisiken, verbunden mit der Betriebssicherheit und Robustheit einer fest installierten Messung, zu ermöglichen.

Die portable Messkopfanklemmung soll mit nur einem Betätigungselement die Zentrierung, Anspannung am Messrohr und die definierte Anpresskraft gewährleisten. Die Schwierigkeit hierbei ist, dass durch die Zentrierung der Messkopfanklemmung auf dem Rohr, der Abstand zwischen Rohrscheitelpunkt und dem Bezugspunkt der Messkopfanklemmung (für die Aufnahme des Federelements) in Abhängigkeit vom Rohrdurchmesser variiert. Folglich muss es ein Funktionselement geben, welches diese Abhängigkeit umgeht.

Die erfindungsgemäße Messkopfanklemmung für Ultraschall-Durchfluss-Messköpfe mit einem Führungselement für die Aufnahme von mindestens einem Messkopf-Schutzgehäuse für mindestens einen Messkopf und mit dem Führungselement verbundenen mindestens einer Spanneinheit und damit verbundenem Spannmittel zur lösbaren Befestigung des Führungselements am Messrohr ist, wobei das Führungselement mit mindestens einer Vorrichtung zum Zentrieren und Festklemmen desselben auf dem Messrohr kraft- und/oder formschlüssig verbunden ist, so dass das Führungselement parallel und mit einem definierten Abstand zum Scheitelpunkt des Messrohrs unabhängig vom Rohrdurchmesser ausgerichtet und befestigt wird. Erfindungsgemäß besteht die Vorrichtung zum Zentrieren und Festklemmen des Führungselements aus einem Zentrierelement, einem Abstandselement und einer Spanneinheit, welche über ein Verbindungselement sowohl miteinander als auch mit dem Führungselement verbunden sind.

Für eine Ausführungsform besteht das Abstandselement aus zwei zueinander parallelen Funktionsflächen, die einen definierten Abstand voneinander haben, wobei die erste Funktionsfläche ein freies Drehgelenk enthält, welches dem Messrohr gegenüber angeordnet ist und eine Schnittstelle für die Aufnahme des Verbindungselements bildet, und die zweite Funktionsfläche auf dem Messrohr aufliegt. Das Abstandselement ist mit dem Führungselement durch eine feste, unbewegliche Verbindung direkt verbunden.

Das Zentrierelement besteht in einer Ausführungsform aus einem rechteckig geformten Teil und ist an seinem distalen Ende mit einem freien Drehgelenk versehen, welches dem Messrohr gegenüber angeordnet ist und eine Schnittstelle für die Aufnahme des Verbindungselements bildet. An seinem, dem Messrohr zugewandten Ende weist das Zentrierelement mittig einen Ausschnitt auf, welcher als Funktionsfläche dient, um das Führungselement parallel zu einer Mantelgeraden des Messrohrs an der Rohroberfläche auszurichten. Der zum Rohrscheitelpunkt symmetrische Ausschnitt des Zentrierelements hat die Form eines Schwalbenschwanzes. Es sind andere Ausführungsformen für die Funktionsfläche in Form von zwei Kugeln, zwei zylindrischen Körpern oder einem prismatischen Ausschnitt möglich.

Das Zentrierelement ist in einer gleitenden Lagerung angeordnet und ausschließlich in radialer Richtung zum Messrohr beweglich.

Die Spanneinheit besteht aus einer zylindrischen Druckfeder, einem Zugbolzen, einem Zugstück, einer Spannschraube, einem Widerlagerbolzen, einem Spannmittel und dem Verbindungselement. Das Zugstück ist mit dem Zugbolzen kraftschlüssig verbunden und das Spannmittel wird in das Zugstück zum symmetrischen Spannen des Führungselements eingelegt. Das Verbindungselement ist in seinem Mittelpunkt in einem auf dem Zugbolzen angeordneten Drehgelenk gelagert, welches gleichzeitig der Aufnahme des Widerlagerbolzens dient. Die Druckfeder ist distal zum Widerlagerbolzen angeordnet und drückt einerseits gegen die Spannschraube und wirkt andererseits radial zum Messrohr auf den Widerlagerbolzen, wobei der Zugbolzen durch den Widerlagerbolzen geführt wird.

Das Verbindungselement ist als Wippe ausgestaltet, die an ihren beiden Enden auf jeweils einem verschiebbaren Gelenklager, welche als Drehgelenke von Abstandselement und Führungselement ausgeführt sind, lose aufliegt.

Das Messkopf-Schutzgehäuse ist mit einem Kraftspeicher verbunden, welcher seinerseits mit dem Führungselement in Wirkverbindung steht.

Die Spanneinheit ist für eine Befestigung mit einer definierten Anpresskraft dimensioniert. Voraussetzung hierfür ist das Vorhandensein einer Schnittstelle mit definiertem Abstand von der Rohroberfläche. Der Abstand wird bei einer hinreichend guten Zentrierung der Messkopfanklemmung unabhängig vom Rohrdurchmesser erreicht.

Der wesentliche Vorteil der Erfindung besteht darin, dass durch Aufsetzen der erfindungsgemäßen Messkopfanklemmung und Spannen der Kette mit nur einem Bedienelement die Anforderungen auf einfachste Art der Bedienung erfüllt werden.

### Ausführung der Erfindung

Die Erfindung wird anhand von Zeichnungen näher erläutert. Hierzu zeigen
Figur 1 ein Messrohr mit der erfindungsgemäßen Messkopfanklemmung,
Figur 2 eine schematische Darstellung der Funktionselemente der Messkopfanklemmung nach Figur 1,
Figur 3 ein in einem Ausschnitt dargestelltes Ausführungsbeispiel und
Figur 4 eine schematische Darstellung des Zentrierelements von der Seite.

Die Befestigung der Ultraschall-Durchfluss-Messköpfe erfolgt außen auf Rohrleitungen, sodass die Messköpfe fluchtend, mittig zur Rohrachse und radial frei positioniert werden können. Hierzu ist eine Zentrierung der Messkopfanklemmung auf der Rohroberfläche notwendig. Die Messkopfanklemmung ist so gestaltet, dass zwei Messköpfe aufgenommen werden können. Sie ist ausreichend lang, um ein Verschieben der Messköpfe zueinander zu gewährleisten. Bei der Verwendung von zwei Messkopfanklemmungen und einer Messung im Reflexmodus (beide Messköpfe auf der gleichen Rohrseite) muss jedweder Messkopfabstand eingestellt werden können. Im Direktmodus müssen beide Messköpfe auf dem Rohr genau gegenüberliegend oder mit einem minimalen Versatz befestigt und damit auch ein negativer Messkopf-Abstand einstellbar ist. Die Befestigung der Messkopfanklemmung am Messrohr erfolgt durch ein geeignetes Spannmittel, welches um das Messrohr gelegt wird. Das Spannmittel wird durch ein Betätigungselement an der Messkopfanklemmung gespannt. Das Spannen erfolgt zentrisch, dass heißt beide Enden des Spannmittels werden gleichmäßig und gleichzeitig gespannt. Die definierten Anpresskräfte sind unabhängig vom Rohrdurchmesser. Durch die erfindungsgemäße Vorrichtung werden die Anpresskräfte sicher und unabhängig vom Anwender(-wissen) erreicht. Durch unterschiedliche Koppelmedien für die Messköpfe sind unterschiedlich hohe Anpresskräfte der Messköpfe auf die Rohrwand notwendig. Die Messkopfanklemmung ist aus chemisch widerstandsfähigen Werkstoffen gefertigt.

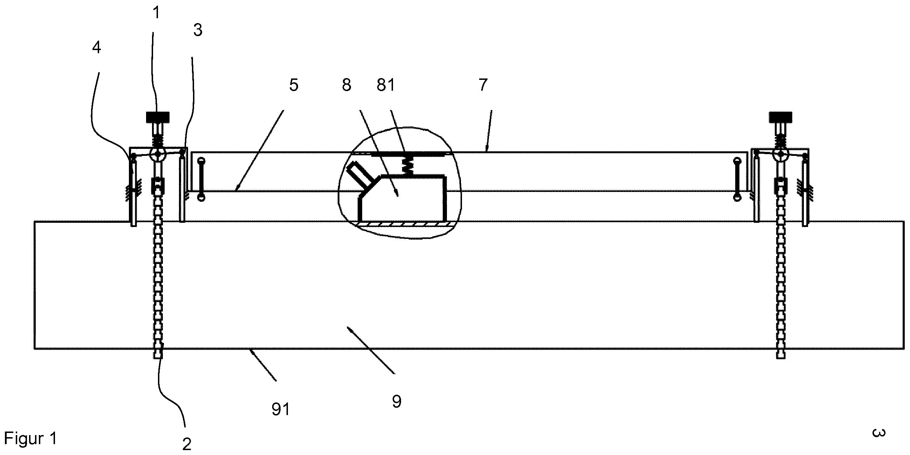

Der prinzipielle Aufbau der erfindungsgemäßen portablen Messkopfanklemmung setzt sich aus einem Führungselement 5 und mindestens einem Messkopfschutzgehäuse 7, zwei Spanneinheiten 1 mit Spannmitteln 2, sowie zwei Abstandselementen 3 und zwei Zentrierelementen 4, zusammen (Figur 1).

### Führungselement

Das Führungselement 5 ist das zentrale Bindeglied für alle Teilfunktionselemente, die über das Führungselement 5 zumindest kraft- und/oder formschlüssig miteinander verbunden sind. Das Führungselement 5 ist ein langgestrecktes Gehäuse und dient desweiteren der Aufnahme mindestens eines Messkopfschutzgehäuses 7. Dazu ist das Führungselement 5 zum Messrohr 9 hin offen. In dem Messkopfschutzgehäuse 7 ist mindestens ein Messkopf 8 angeordnet, welcher mit seiner Kontaktfläche auf der Rohroberfläche 91 aufliegt. Desweiteren ist das Messkopfschutzgehäuse 7 mit einem Kraftspeicher 81 (beispielsweise einer oder mehrere Federn) verbunden, welcher seinerseits mit dem Messkopf 8 in Verbindung steht. Durch den Kraftspeicher 81 wird der im Messkopfschutzgehäuse 7 befindliche Messkopf 8 mit einer definierten, gleichbleibenden Andruckkraft und einem definierten Weg gegen die Rohroberfläche 91 gedrückt. In dem Führungselement 5 wird das Messkopfschutzgehäuse 7 entlang der Rohrlängsachse geführt.

Mit dem Führungselement 5 sind für dieses Ausführungsbeispiel an beiden Enden jeweils eine Vorrichtung zum Zentrieren und Festklemmen des Führungselements 5 verbunden. Diese Vorrichtung setzt sich, in axialer Richtung des Messrohres 9 spiegelsymmetrisch an beiden Enden angeordnet, jeweils aus einem Zentrierelement 4, einer Spanneinheit 1 und einem Abstandselement 3 zusammen. Das Führungselement 5 wird parallel und durch das Abstandselement 3 mit einem definierten Abstand zum Scheitelpunkt der Rohroberfläche 91 unabhängig vom Rohrdurchmesser ausgerichtet und mit der Spanneinheit 1 befestigt. Die Verbindung zum Abstandselement 3 ist fest und unbeweglich. Da durch das Abstandselement 3 ein definierter Abstand zum Scheitelpunkt der Rohroberfläche 91 erreicht wird, werden die mit dem Messkopfschutzgehäuse 7 verbundenen Kraftspeicher 81 (beispielsweise Federn) stets und unabhängig vom Rohrdurchmesser gleich stark komprimiert. Im festgespannten Zustand wird durch das Führungselement 5 auf jeden Punkt der Rohroberfläche 91 dieselbe Kraft ausgeübt.

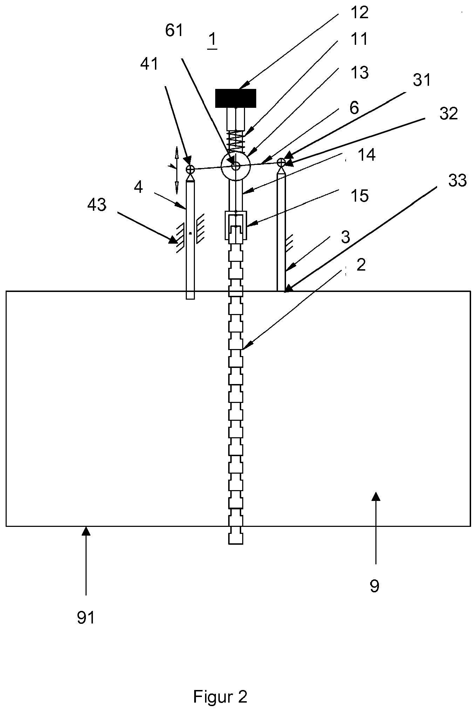

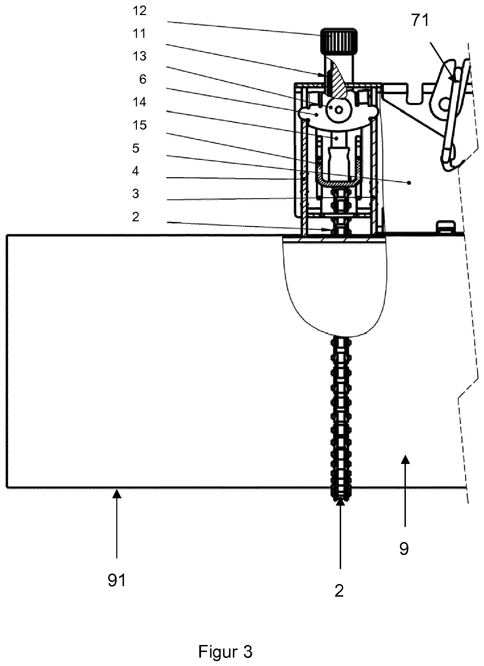

Figur 2 zeigt eine schematische Darstellung der Funktionselemente der Messkopfanklemmung nach Figur 1 und Figur 3 zeigt ein in einem Ausschnitt dargestelltes Ausführungsbeispiel, welches nachfolgend erläutert werden soll.

### Abstandselement

Jeweils ein Abstandselement 3 ist an beiden Enden des Führungselements 5 direkt durch eine feste, unbewegliche Verbindung, z.B. durch Schweißen oder Verschrauben, angeordnet. Durch das Abstandselement 3 wird ein immer gleicher Abstand des Messkopfes 8 zur Rohroberfläche 91 ermöglicht. Das Abstandelement 3 weist zwei zueinander parallele Funktionsflächen 32 und 33 mit einem definierten Abstand voneinander auf, wobei die erste Funktionsfläche 32 ein freies Drehgelenk 31 enthält und die zweite Funktionsfläche 33 auf dem Messrohr 9 aufliegt. In einer einfachen Ausführungsform wird das Abstandselement 3 durch ein rechteckig geformtes Blechteil ausgeführt. Es kann beispielsweise auch als Rundstab ausgeführt sein. Ein Drehgelenk 31, welches in der Ausführung als festes Drehgelenk wirkt, bildet eine Schnittstelle für die Aufnahme eines Verbindungselements, beispielsweise einer Wippe 6. Durch seine konstruktive Ausgestaltung ermöglicht das Abstandselement 3 die definierte Anpresskraft der Messköpfe 8 bzw. des Messkopfschutzgehäuses 7 auf dem Messrohr 9.

### Zentrierelement

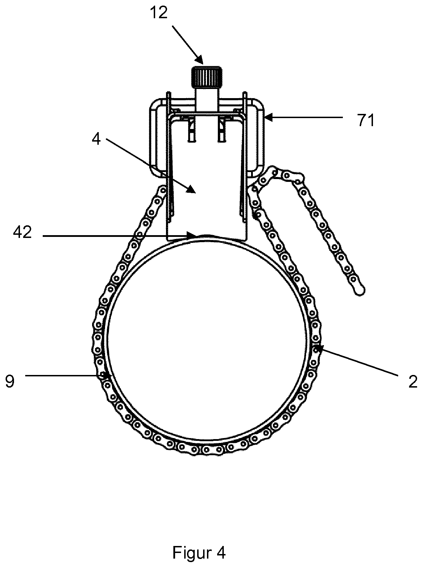

An beiden Enden des Führungselements 5 von dem Abstandselement 3 in axialer Richtung des Messrohres 9 nach außen hin beabstandet ist jeweils ein Zentrierelement 4 angeordnet. Das Zentrierelement 4 ermöglicht die fluchtende Montage des Gesamtsystems zur Rohrlängsachse. Das Zentrierelement 4 besteht aus einem rechteckig geformten Teil, beispielsweise einem Blech, mit einem Drehgelenk 41, welches an dem dem Messrohr 9 gegenüberliegenden Ende des Zentrierelements 4 angeordnet ist. Das Zentrierelement 4 hat an seinem, dem Messrohr 9 zugewandten Ende mittig einen zum Rohrscheitelpunkt symmetrischen Ausschnitt 42, um ein Aufsetzen auf kleine und große Rohre 9 zu erleichtern. Der Abstand der Berührungspunkte des Ausschnittes 42 mit dem Messrohr 9 sollte kleiner als der Rohrdurchmesser sein. Diese Bedingung lässt sich für verschiedene Rohrdurchmesser mit einer einzigen Anordnung erfüllen, so dass ein und dieselbe Anordnung für verschiedenen Durchmesser des Messrohres 9 genutzt werden kann. Figur 4 zeigt hierzu eine schematische Darstellung mit Blick auf das Zentrierelement 4. Der Ausschnitt 42 hat beispielsweise eine Schwalbenschwanzform und dient als Funktionsfläche, um das Führungselement 5 parallel zu einer Mantelgeraden des Rohrs 9 an der Rohroberfläche 91 auszurichten. Das Drehgelenk 41 ist ebenfalls wie beim Abstandselement 3 ein freies Gelenk, auf dem die Wippe 6 aufliegt und so in diesen beiden Punkten (Drehgelenke 31 und 41) frei drehbar gelagert ist. Durch die Wippe 6 und einer gleitenden Lagerung 43 des Zentrierelements 4, welche z.B. als Loslager ausgeführt ist, wird es ermöglicht, dass bei unterschiedlichen Rohrdurchmessern eine Auslenkung des Zentrierelements 4 kompensiert wird. Das Zentrierelement 4 ist mit dem Führungselement 5 so verbunden, dass das Zentrierelement 4 ausschließlich in radialer Richtung zum Messrohr 9 beweglich ist.

### Verbindungselement

Das Verbindungselement ist in dem vorliegenden Ausführungsbeispiel als Wippe 6 ausgestaltet und durch ihre Schnittstellen zum Abstandselement 3 und zum Zentrierelement 4 der elementare Bestandteil der Konstruktion. Die Wippe 6 ist eine langgestreckte Einheit, beispielsweise in Form eines Balkens, die an ihren beiden Enden auf dem Abstandselement 3 und dem Zentrierelement 4 lose aufliegt. Die Wippe 6 ist mit der Gesamtkonstruktion zum Ersten durch ein verschiebbares Gelenklager zum Zentrierelement 4 und ein weiteres Gelenklager zum Abstandselement 3 verbunden, welche als Drehgelenke 41 und 31 ausgeführt sind. Zum zweiten besteht eine Verbindung zu einem Gelenklager, welches als Drehgelenk 61 ausgeführt ist und der Aufnahme eines Widerlagerbolzens 13 dient.

Die Wippe 6 ist an einem Ende auf dem Drehgelenk 31 drehbar gelagert. Durch das Abstandselement 3 ist der Abstand dieses Drehpunkts gegenüber dem Rohrscheitelpunkt fest definiert. Das Lager 43 befindet sich an dem Zentrierelement 4, welches mit dem entgegengesetzten Ende der Wippe 6 in Wirkverbindung steht. Die Wippe 6 liegt hier derart auf dem Zentrierelement 4 auf, dass sich ein verschiebliches Gelenklager (Drehgelenk 41) ergibt. Die Wippe 6 über verfügt eine Bohrung in welcher der Widerlagerbolzen 13 drehbar gelagert ist. Liegen das Zentrierelement 4 und das Abstandselement 3 auf der Rohroberfläche 91 auf und wirkt durch den Widerlagerbolzen 13 eine radiale zum Rohrmittelpunkt des Messrohres 9 gerichtete Kraft auf die Wippe 6, ergibt sich eine feste und unbewegliche Verbindung von Spanneinheit 1 und Messrohr 9. Da die Spannschraube 12 den Widerlagerbolzen 13 als Widerlager nutzt, wird der Widerlagerbolzen 13 beim Spannen des Spannmittels 2 mittels der Spannschraube 12 in Richtung Messrohr 9 gezogen. Durch diesen Vorgang werden gleichzeitig die beiden Lagerpunkte der Wippe (beim Abstandelement 3 und beim Zentrierelement 4) an das Messrohr 9 gedrückt. Somit ergibt sich eine feste Verbindung von Messrohr 9 und Spanneinheit 1. Folglich sorgen die Wippe 6 und der Widerlagerbolzen 13, im Zusammenspiel mit dem Zentrierelement 4, einerseits für die Zentrierung der Messkopfanklemmung auf dem Messrohr 9 und andererseits, im Zusammenspiel mit dem Abstandselement 3, für die Voraussetzungen zum Erreichen einer definierten Anpresskraft.

### Spanneinheit und Spannmittel

Mit der Spanneinheit 1 wird die gesamte Messkopfanklemmung mit Spanneinheit 1, Abstandselement 3, Zentrierelement 4, Führungselement 5 und Messkopfschutzgehäuse 7 am Messrohr 9 positioniert und befestigt. Die Spanneinheit 1 ist jeweils zwischen dem Abstandselement 3 und dem Zentrierelement 4 angeordnet und über das Verbindungselement Wippe 6 mit dem Abstandselement 3 und dem Zentrierelement 4 und somit mit dem Führungselement 5 verbunden. Sie besteht aus einer zylindrischen Druckfeder 11, einem Zugbolzen 14, einem Zugstück 15, einem Widerlagerbolzen 13, einem Spannmittel 2 und der Wippe 6. Die Befestigung am Messrohr 9 erfolgt grundsätzlich durch Spannen des Spannmittels 2. Dazu wird das Spannmittel 2 in das Zugstück 15 eingelegt. Das Zugstück 15 ist mit dem Zugbolzen 14 kraftschlüssig verbunden. Durch das Zugstück 15 wird eine symmetrische Spannung des Spannmittels 2 ermöglicht. Auf dem Zugbolzen 14 ist der Widerlagerbolzen 13 angeordnet, welcher seinerseits mit der Wippe 6 in Wirkverbindung steht. Damit ist der Wiederlagerbolzen 13 das Bindeglied zwischen Zugbolzen 14 und Wippe 6. Die Wippe 6 ist in einem Drehlager 61 gelagert, so dass sie frei schwingen kann. Die Wippe 6 sorgt für die Aufteilung der durch den Zugbolzen 14 eingebrachten Spannkraft sowohl auf Abstandselement 3 und als auch auf Zentrierelement 4 und somit für eine gleichzeitige Zentrierung der Messkopfanklemmung und eine Realisierung der Voraussetzung für eine definierte Anpresskraft der Messköpfe 8. Distal zum Widerlagerbolzen 13 ist die Druckfeder 11 angeordnet. Diese Druckfeder 11 drückt einerseits gegen die Spannschraube 12 und wirkt andererseits senkrecht zur Längsachse des Führungselements 5 und radial zum Messrohr 9 auf den Widerlagerbolzen 13. Durch den Widerlagerbolzen 13 wird der Zugbolzen 14 geführt. Der Widerlagerbolzen 13 dient gleichzeitig als Widerlager für die Druckfeder 11. Eine Spannschraube 12, welche mit der Druckfeder 11 in Wirkverbindung steht, dient der einfachen Vormontage.

Da das Spannen symmetrisch erfolgen muss, wird gleichzeitig auf beide Enden des Spannmittels 2 eingewirkt. Um eine möglichst feste Umschlingung des Rohrs durch das Spannmittel zu erreichen, ist es notwendig, dass ein hinreichend großer Hub auf das Spannmittel 2 aufgebracht wird. Hierfür verfügt die Spanneinheit über die Spannschraube 12, den Zugbolzen 14 und das Zugstück 15. Diese Teile sind drehbar im Widerlagerbolzen 13 geführt.

Für die Montage der Messkopfanklemmung wird der Zugbolzen 14 durch Drücken auf die Druckfeder 11 betätigt und radial zum Messrohr 9 bewegt. Das Spannmittel 2 wird eingehängt und möglichst straff um das Messrohr 9 gezogen. Der Zugbolzen 14 wird losgelassen und das im Zugstück eingehängte Spannmittel 2 wird durch die Druckfeder 11 vorgespannt. Durch das Zentrierelement 4 mit seinem Gleitlager 43 und der Wippe 6 wird die Messkopfanklemmung zentriert. Die zylindrische Druckfeder 11 hält die Spanneinheit 1 im oberen Totpunkt auf dem Messrohr 9 und spannt das Spannmittel 2 nach dem Einhängen in die Spannvorrichtung 1 vor. Die Spannschraube 12 erleichtert die Handhabung zur werkzeuglosen Betätigung der Spanneinheit. Somit ist die Messkopfanklemmung am Messrohr 9 fixiert, kann aber noch verschoben werden um eine optimale Ausrichtung am Messrohr 9 zu erreichen.

Als Spannmittel 2 wird beispielsweise eine einreihige Rollenkette, ein Spannband oder andere bekannte Spannmittel verwendet. Für das vorliegende Ausführungsbeispiel wird eine einreihige Rollenkette gewählt. Der Vorteil der Rollenkette ist die große Bruchlast mit geringer Dehnung bei gleichzeitig sehr hoher Flexibilität. Durch die Flexibilität lässt sich die Rollenkette leicht auch um kleine Rohre legen, verstauen und ist vielfach/beliebig wiederverwendbar. Durch die geringe Dehnung ist der notwendige Spannweg gering, was die Handhabung erleichtert.

Für verschiedene Rohrdurchmesser wird die Länge der Rollenkette in Relation zu Rohrumfang und Messkopfanklemmung variabel gestaltet und an der Spanneinheit 1 fixiert. Hierbei ist es sinnvoll ein Kettenende mit einem fest montierten Haken (Kettenhaken) zu versehen und das andere Kettenende in einem Richtgesperre (Kettenschloss) zu führen. Mittels des Richtgesperres lässt sich die Rollenkette, im Rahmen der Kettenteilung eng an das Messrohr 9 anlegen und durch Durchziehen der Rollenkette durch das Richtgesperre diese kürzeste mögliche Länge fixieren. Anschließend wird das verbliebene Spiel der Rollenkette mittels der Spanneinheit 1 kompensiert und die Messkopfanklemmung fest an das Messrohr 9 angespannt. Zum Lösen der Messkopfanklemmung verfügt das Kettenschloss über einen Entsperrhebel der die Sperrung des Richtgesperres aufhebt und die Rollenkette zurückgezogen werden kann.

Um die Handhabung der Messkopfanklemmung zu erleichtern, wirkt zwischen der Spannschraube 12 und dem Widerlagerbolzen 13 die Druckfeder 11, durch welche das Spannmittel 2 vorgespannt wird. Aufgrund der Bauteilgestaltung ist es nur möglich, das Kettenschloss im unteren Totpunkt einzuhängen, hierfür wird die Spannschraube 12, nach dem Aufsetzen der Messkopfanklemmung auf das Messrohr 9, in Richtung Messrohr 9 gedrückt und anschließend das Kettenschloss eingehängt.

### Messkopf-Schutzgehäuse

Das einteilige Messkopf-Schutzgehäuse 7 wird über eine Führung, die ausschließlich eine radiale Bewegung erlaubt, mit dem Führungselement 5 verbunden und ist somit axial zum Messrohr 9 ausgerichtet. Das Messkopf-Schutzgehäuse 7 nimmt einen oder zwei Messköpfe 8 sowie die dazugehörigen Kraftspeicher 81 (z.B. Federn) auf und bietet einerseits Schlagschutz für die Messköpfe 8 und stellt gleichzeitig die axiale Verbindung zwischen Führungselement 5 und Messkopf 8 her. Der Kraftspeicher 81 wirkt hierbei mit einer definierten Anpresskraft zwischen dem Messkopf-Schutzgehäuse 7 und dem entsprechenden Messkopf 8. Um die Anpresskraft auf den Messkopf 8 aufzubringen verfügt das Messkopf-Schutzgehäuse 7 an den Enden über jeweils einen Exzenterhebel 71. Diese greifen in die entsprechenden Schnittstellen des Führungselements 5 ein. Durch Betätigen der Exzenterhebel 71 wird das Messkopf-Schutzgehäuse 7 in Richtung Rohroberfläche 91 gedrückt, wodurch der Kraftspeicher 81 gespannt und eine definierte Anpresskraft auf den Messkopf 8 ausgeübt wird.

### Bezugszeichen

- 1: Spanneinheit
- 2: Spannmitteln
- 3: zwei Abstandselement
- 31: Drehgelenk
- 32: Funktionsfläche
- 33: Funktionsfläche
- 4: Zentrierelement
- 41: Drehgelenk
- 42: Ausschnitt
- 43: Lagerung des Zentrierelements 4
- 5: Führungselement
- 6: Wippe
- 61: Drehgelenk
- 7: Messkopfschutzgehäuse
- 71: Exzenterhebel
- 8: Messkopf
- 81: Kraftspeicher
- 9: Messrohr
- 91: Rohroberfläche
- 11: Druckfeder
- 12: Spannschraube
- 13: Widerlagerbolzen
- 14: Zugbolzen
- 15: Zugstück

## Patentansprüche

1. Messkopfanklemmung für Ultraschall-Durchfluss-Messköpfe mit einem Führungselement (5) für die Aufnahme von mindestens einem Messkopfschutzgehäuse (7) für mindestens einen Messkopf (8) und mit mindestens zwei mit dem Führungselement (5) verbundenen Spanneinheiten (1) und damit verbundenen Spannmitteln (2) zur lösbaren Befestigung des Führungselements (5) am Messrohr (9), wobei das Führungselement (5) mit mindestens einer Vorrichtung zum Zentrieren und Festklemmen desselben auf dem Messrohr (9) kraft- und/oder formschlüssig verbunden ist, so dass das Führungselement (5) parallel und mit einem definierten Abstand zum Scheitelpunkt des Messrohrs (9) unabhängig vom Rohrdurchmesser ausgerichtbar und befestigbar ist, **dadurch gekennzeichnet, dass** die Vorrichtung zum Zentrieren und Festklemmen des Führungselements (5) aus einem Zentrierelement (4), einem Abstandselement (3) und einer Spanneinheit (1) besteht, welche über ein Verbindungselement miteinander verbunden sind, und dass das Führungselement (5) mit dem Abstandselement (3) fest und mit dem Zentrierelement (4) beweglich verbunden ist.

2. Messkopfanklemmung nach Anspruch 1, **dadurch gekennzeichnet, dass** das Abstandselement (3) aus zwei zueinander parallelen Funktionsflächen (32, 33) besteht, die einen definierten Abstand voneinander haben, wobei die erste Funktionsfläche (32) ein freies Drehgelenk (31) enthält, welches dem Messrohr (9) gegenüber angeordnet ist und eine Schnittstelle für die Aufnahme des Verbindungselements bildet, und die zweite Funktionsfläche (33) auf dem Messrohr 9 aufliegt, und dass das Abstandselement (3) mit dem Führungselement (5) durch eine feste, unbewegliche Verbindung direkt verbunden ist.

3. Messkopfanklemmung nach Anspruch 1, **dadurch gekennzeichnet, dass** das Zentrierelement (4) aus einem rechteckig geformten Teil besteht und an seinem distalen Ende mit einem freien Drehgelenk (41), welches dem Messrohr (9) gegenüber angeordnet ist und eine Schnittstelle für die Aufnahme des Verbindungselements bildet, versehen ist und an seinem, dem Messrohr (9) zugewandten Ende, mittig einen zum Rohrscheitelpunkt symmetrischen Ausschnitt (42) aufweist, welcher als Funktionsfläche dient, um das Führungselement (5) parallel zu einer Mantelgeraden des Messrohrs (9) an der Rohroberfläche (91) auszurichten.

4. Messkopfanklemmung nach Anspruch 3, **dadurch gekennzeichnet, dass** der zum Rohrscheitelpunkt symmetrische Ausschnitt (42) des Zentrierelements (4) die Form eines Schwalbenschwanzes hat oder in Form von zwei Kugeln oder in Form von zwei zylindrischen Körpern angeordnet ist oder ein prismatischer Ausschnitt ist.

5. Messkopfanklemmung nach Anspruch 3, **dadurch gekennzeichnet, dass** das Zentrierelement (4) in einer gleitenden Lagerung (43) angeordnet ist und ausschließlich in radialer Richtung zum Messrohr (9) beweglich ist.

6. Messkopfanklemmung nach Anspruch 1, **dadurch gekennzeichnet, dass** die Spanneinheit (1) aus einer zylindrischen Druckfeder (11), einem Zugbolzen (14), einem Zugstück (15), einer Spannschraube (12), einem Widerlagerbolzen (13), einem Spannmittel (2) und dem Verbindungselement besteht.

7. Messkopfanklemmung nach Anspruch 6, **dadurch gekennzeichnet, dass** das Zugstück (15) mit dem Zugbolzen (14) kraftschlüssig verbunden ist und das Spannmittel (2) in das Zugstück (15) zum symmetrischen Spannen des Führungselements (5) einlegbar ist, und das Verbindungselement in seinem Mittelpunkt in einem auf dem Zugbolzen (14) angeordneten Drehgelenk (61) gelagert ist, welches gleichzeitig der Aufnahme des Widerlagerbolzens (13) dient, und die Druckfeder (11) distal zum Widerlagerbolzen (13) angeordnet ist und einerseits gegen die Spannschraube (12) drückt und andererseits senkrecht zur Längsachse des Führungselements (5) und radial zum Messrohr (9) auf den Widerlagerbolzen (13) wirkt, wobei der Zugbolzen (14) durch den Widerlagerbolzen (13) geführt wird.

8. Messkopfanklemmung nach Anspruch 1, **dadurch gekennzeichnet, dass** das Verbindungselement als Wippe (6) ausgestaltet ist, die an ihren beiden Enden auf jeweils einem verschiebbaren Gelenklager, welches jeweils als Drehgelenk (31, 41) von Abstandselement (3) und Zentrierelement (4) ausgeführt ist, lose aufliegt.

9. Messkopfanklemmung nach Anspruch 1, **dadurch gekennzeichnet, dass** das Messkopf-Schutzgehäuse (7) mit einem Kraftspeicher (81) verbunden ist, welcher seinerseits mit dem Führungselement (5) in Wirkverbindung steht.

## Claims

1. Measuring head clamp-on device for ultrasonic flow measuring heads, comprising a guide element (5) for receiving at least one measuring head protective housing (7) for at least one measuring head (8), at least two clamping units (1) connected to the guide element (5), and thereto connected clamping devices (2) for detachably fastening the guide element (5) to a measuring pipe (9), wherein the guide element (5) is non-positively and/or positively connected to at least one apparatus for centring and clamping the same on the measuring pipe (9), so that the guide element (5) can be oriented and fastened parallel and with a defined distance to the apex of the measuring pipe (9) irrespective of the pipe diameter, **characterized in that** the apparatus for centring and clamping the guide element (5) comprises a centring element (4), a spacing element (3) and a clamping unit (1) which are connected to one another via a connecting element, and **characterized in that** the guide element (5) is fixedly connected to the spacing element (3) and movably connected to the centring element (4).

2. Measuring head clamp-on device according to claim 1, **characterized in that** the spacing element (3) comprises two mutually parallel functional surfaces (32, 33) which are a predetermined distance apart, wherein the first functional surface (32) contains a free-moving pivot joint (31) which is arranged opposite the measuring pipe (9) and forms an interface for reception of the connecting element, and the second functional surface (33) rests on the measuring pipe (9), and **characterized in that** the spacing element (3) is directly connected to the guide element (5) by a fixed, immovable connection.

3. Measuring head clamp-on device according to claim 1, **characterized in that** the centring element (4) comprises a rectangularly shaped part and is provided at its distal end with a free-moving pivot joint (41) which is arranged opposite the measuring pipe (9) and forms an interface for reception of the connecting element, and wherein the centring element (4) has in the middle of its end facing towards the measuring pipe (9) a cutout (42) symmetrical to the apex of the pipe, which cutout serves as a functional surface in order to orient the guide element (5) parallel to a straight line on the surface (91) of the measuring pipe (9).

4. Measuring head clamp-on device according to claim 3, **characterized in that** the cutout (42) of the centring element (4), said cutout being symmetrical to the pipe apex, has the shape of a dovetail, or is arranged in the form of two spheres or in the form of two cylindrical bodies, or is a prismatic cutout.

5. Measuring head clamp-on device according to claim 3, **characterized in that** the centring element (4) is disposed in a sliding support (43) and is solely movable in a radial direction to the measuring pipe (9).

6. Measuring head clamp-on device according to claim 1, **characterized in that** the clamping unit (1) comprises a cylindrical compression spring (11), a tension bolt (14), a tension element (15), a clamping screw (12), an abutment pin (13), a clamping device (2) and the connecting element.

7. Measuring head clamp-on device according to claim 6, **characterized in that** the tension element (15) is non-positively connected to the tension bolt (14) and the clamping device (2) can be inserted into the tension element (15) for symmetrical clamping of the guide element (5), and the connecting element is mounted in its centre point in a pivot joint (61) which is disposed on the tension bolt (14), and which pivot joint (61) serves at the same time for receiving the abutment pin (13), and the compression spring (11) is arranged distally to the abutment pin (13) and, on the one hand, presses against the clamping screw (12) and, on the other hand, acts perpendicularly to the longitudinal axis of the guide element (5) and radially to the measuring pipe (9) upon the abutment pin (13), wherein the tension bolt (14) is guided by the abutment pin (13).

8. Measuring head clamp-on device according to claim 1, **characterized in that** the connecting element is configured as a rocker (6), which at each of its two ends rests loosely on a displaceable rocker bearing which is realized as pivot joint (31, 41) of the spacing element (3) and the centring element (4), respectively.

9. Measuring head clamp-on device according to claim 1, **characterized in that** the measuring head protective housing (7) is connected to a spring energy store (81) which interacts with the guide element (5).

## Revendications

1. Dispositif de fixation pour têtes de mesure du débit ultrasonores avec un élément de guidage (5) pour la réception d'au moins un boîtier de protection de tête de mesure (7) pour au moins une tête de mesure (8) et avec au moins deux unités de serrage (1) reliées avec l'élément de guidage (5) ainsi qu'avec des moyens de serrage (2) pour fixer de manière amovible l'élément de guidage (5) à la conduite de mesure (9), ledit élément de guidage (5) étant relié par adhérence et/ou par conjugaison de forme avec au moins un dispositif permettant de centrer et de serrer l'élément de guidage (5) sur la conduite de mesure (9), en sorte que l'élément de guidage (5) peut être orienté et fixé parallèlement et à une distance définie par rapport à l'apex de la conduite de mesure (9), indépendamment du diamètre de la conduite, **caractérisé en ce que** le dispositif de centrage et de serrage de l'élément de guidage (5) comporte un élément de centrage (4), un élément d'écartement (3) et une unité de serrage (1) reliés entre eux à l'aide d'un raccord, et **en ce que** l'élément de guidage (5) est relié de manière rigide avec l'élément d'écartement (3) et de manière mobile avec l'élément de centrage (4).

2. Dispositif de fixation pour têtes de mesure selon la revendication 1, **caractérisé en ce que**
l'élément d'écartement (3) comporte deux surfaces fonctionnelles (32, 33) mutuellement parallèles et ayant une distance définie entre elles, la première surface fonctionnelle (32) comportant une charnière mobile (31) qui est disposée en face de la conduite de mesure (9) et représente une interface destinée à la réception du raccord, la deuxième surface fonctionnelle (33) reposant sur la conduite de mesure (9), et **en ce que** l'élément d'écartement (3) est directement relié avec l'élément de guidage (5) de manière fixe et immobile.

3. Dispositif de fixation pour têtes de mesure selon la revendication 1, **caractérisé en ce que**
l'élément de centrage (4) comporte une pièce de forme rectangulaire et, à son extrémité distale, une charnière mobile (41) qui est disposée en face de la conduite de mesure (9) et représente une interface destinée à la réception du raccord, et en outre **caractérisé en ce que** l'élément de centrage (4) comporte au centre de son extrémité tournée vers la conduite de mesure (9) une découpe (42) symétrique à l'apex de la conduite, ladite découpe (42) servant de surface fonctionnelle pour aligner l'élément de guidage (5) parallèlement à une ligne droite sur la surface (91) de la conduite de mesure (9).

4. Dispositif de fixation pour têtes de mesure selon la revendication 3, **caractérisé en ce que**
la découpe (42) de l'élément de centrage (4) étant symétrique à l'apex de la conduite a la forme d'une queue d'aronde ou est disposée sous la forme de deux sphères ou de deux corps cylindriques ou est une découpe prismatique.

5. Dispositif de fixation pour têtes de mesure selon la revendication 3, **caractérisé en ce que**
l'élément de centrage (4) est disposé dans un logement coulissant (43) et n'est mobile qu'en direction radiale par rapport à la conduite de mesure (9).

6. Dispositif de fixation pour têtes de mesure selon la revendication 1, **caractérisé en ce que**
l'unité de serrage (1) comporte un ressort de pression cylindrique (11), un boulon tirant (14), un élément de traction (15), une vis de serrage (12), un boulon de butée (13), un moyen de serrage (2) et le raccord.

7. Dispositif de fixation pour têtes de mesure selon la revendication 6, **caractérisé en ce que**
l'élément tirant (15) est relié par adhérence avec le boulon tirant (14) et le moyen de serrage (2) peut être inséré dans l'élément tirant (15) pour serrer symétriquement l'élément de guidage (5), et le raccord est logé au niveau de son centre dans une charnière (61) disposée sur le boulon tirant (14), ladite charnière (61) servant en même temps à la réception du boulon de butée (13), et en outre **caractérisé en ce que** le ressort de pression (11) est disposé de manière distale par rapport au boulon de butée (13) et, d'un côté, pèse contre la vis de serrage (12) et, de l'autre côté, agit sur le boulon de butée (13) de manière perpendiculaire à l'axe longitudinal de l'élément de guidage (5) et de manière radiale à la conduite de mesure (9), le boulon tirant (14) étant guidé par le boulon de butée (13).

8. Dispositif de fixation pour têtes de mesure selon la revendication 1, **caractérisé en ce que**
le raccord est réalisé sous la forme d'une bascule (6) qui, à chacune de ses deux extrémités, repose librement sur un palier articulé étant réalisé sous la forme d'une charnière (31, 41) de l'élément d'écartement (3) et de l'élément de centrage (4), respectivement.

9. Dispositif de fixation pour têtes de mesure selon la revendication 1, **caractérisé en ce que**
le boîtier de protection de tête de mesure (7) est relié avec un accumulateur à ressort (81) qui interagit avec l'élément de guidage (5).
